# EUROPÄISCHE PATENTSCHRIFT

(11) **EP 3 026 592 B1**
(45) Veröffentlichungstag und Bekanntmachung des Hinweises auf die Patenterteilung: **04.04.2018**
(21) Anmeldenummer: 15196409.5
(22) Anmeldetag: 26.11.2015
(51) Int. Cl.: G06F 21/56, G06F 21/76

(54) **VERFAHREN UND VORRICHTUNG ZUM DETEKTIEREN VON SCHADSTRUKTUREN IN ELEKTRONISCHEN SCHALTKREISEN**
METHOD AND DEVICE FOR DETECTING HARMFUL STRUCTURES IN ELECTRONIC CIRCUITRY
PROCEDE ET DISPOSITIF DE DETECTION DE STRUCTURES NOCIVES DANS DES CIRCUITS DE COMMUTATIONS ELECTRONIQUES

(30) Priorität: 27.11.2014 AT 508562014
(43) Veröffentlichungstag der Anmeldung: 01.06.2016
(73) Patentinhaber: Technische Universität Wien, 1040 Wien (AT)
(72) Erfinder: KRIEG, Christian, 1120 Wien (AT); SCHUPFER, Florian, 1200 Wien (AT); RATHMAIR, Michael, 1170 Wien (AT)
(74) Vertreter: Weiser, Andreas

(56) Entgegenhaltungen:
- US-A1- 2010 180 344
- US-A1- 2012 216 280
- MOHAMMAD TEHRANIPOOR ET AL: "Trustworthy Hardware: Trojan Detection and Design-for-Trust Challenges", COMPUTER, Bd. 44, Nr. 7, 31. Juli 2011 (2011-07-31), Seiten 66-74, XP055057878, ISSN: 0018-9162, DOI: 10.1109/MC.2010.369

## Beschreibung

Die vorliegende Erfindung betrifft ein Verfahren und eine Vorrichtung zum automatisierten Detektieren von Schadstrukturen, die in einen elektronischen Schaltkreis integriert sind, welcher ausgehend von einem in einer Hardwarebeschreibungssprache modellierten Systemmodell generiert wurde.

Verfahren solcher Art dienen zum Detektieren sogenannter "Hardware-Trojaner", welche z.B. mit elektronischen Schaltkreisen von Drittanbietern in ein größeres System als Schadstrukturen integriert und darin aktiv werden. Zum Überprüfen solcher Schaltkreise und Detektieren von Hardware-Trojanern sind heute verschiedene Verfahren bekannt, die sich in Aufwand, Anwendungsfall und Treffsicherheit der Detektion voneinander unterscheiden:
Beim "Model-Checking" wird das Systemmodell in einen Zustandsautomaten umgewandelt und es werden allgemeine Kriterien für Sicherheitsregeln aufgestellt. Ein solches Verfahren ist beispielsweise aus A. Höller et al., "Automatized High-Level Evaluation of Security Properties for RTL Hardware Designs", Proceedings of the Workshop on Embedded Systems' Security, ACM 2013, Seite 6, bekannt. Der Zustandsautomat wird auf Einhaltung der Sicherheitsregeln geprüft, wobei jedoch bloß die Zustandsautomaten-Darstellung von sequentiellem Verhalten unterstützt wird. Aus diesem Grund bleiben dabei große Bereiche des elektronischen Schaltkreises ungeprüft. Überdies ist beim Model-Checking ein Definieren von Sicherheitsregeln auf der Grundlage von allgemeinen Kriterien nicht für alle Schadstrukturen wirksam möglich. Aus N. Rathmair et al., "Applied Formal Methods for Hardware Trojan Detection", Proceedings of 2014 IEEE International Symposium on Circuits and Systems (ISCAS), Juni 2014, ist ein dazu ergänzendes Verfahren zur Erzeugung von aus dem Verhalten von Schadstrukturen abgeleiteten Sicherheitsregeln bekannt.

Beim Verfahren der Laufzeitprüfung (Runtime Verification) werden Eigenschaften definiert, die gutartiges bzw. bösartiges Verhalten beschreiben, siehe z.B. M. B. Bilzor, "Defining and Enforcing Hardware Security Requirements", Dissertation, U.S. Naval Postgraduate School, Monterey, CA, Dezember 2011. Dadurch kann zwar effektiv überwacht werden, dass ein (oder mehrere) Schaltkreis(e) die Sicherheitsregeln einhält/einhalten, allerdings stellt eine derartige Überwachung nur eine letzte Möglichkeit dar, da sie erst im Echtbetrieb, d.h. im Betrieb des Gesamtsystems, einsetzbar ist, weshalb das Erkennen eines Hardware-Trojaners bei der Laufzeitprüfung immer sehr kostspielige Folgen mit Austausch der bösartigen Schaltkreise und meist aufwändigem, langwierigem Neuaufbau des gesamten Systems hat.

Bei der sogenannten Struktur-Überprüfung können Schaltkreise bereits im Entwicklungsstadium überprüft werden, wie dies beispielsweise J. Yust et al., "Structural Checking: Detecting Malicious Logic without a Golden Reference", Journal of Computational Intelligence and Electronic Systems, Vol. 1, No. 2, Seiten 169 bis 177, 2012, zu entnehmen ist. Bei diesem Verfahren werden Signale, die auf wesentliche Ein- und Ausgänge wirken, auf Effekte potentieller Schadstrukturen analysiert, wobei ein geübter Prüfingenieur gezielt auf bestimmte Arten von Schadstrukturen bzw. Angriffen prüft. Da auch hier aufgrund der bloßen Überwachung der Ein- und Ausgangssignale ein Großteil des Schaltkreises völlig unberücksichtigt bleibt und die Eigenschaften bösartigen Verhaltens bei der Erkennung nicht in Betracht gezogen werden, garantiert auch dieses Verfahren keine umfassende Detektion von Schadstrukturen.

US 2012/0216280 A1 offenbart ein Verfahren in dem ein Klassifizierer mit Merkmalen von gut- und bösartigen Scriptcode trainiert wird. Unbekannter Scriptcode wird daraufhin in einen abstrakten Syntaxbaum umgewandelt aus welchem Merkmale mittels eines Zustandsautomaten ermittelt werden. Der Klassifizierer berechnet dann eine Wahrscheinlichkeit für die ermittelten Merkmale auf Grundlage dessen der Scriptcode als gut- oder bösartig gewertet wird. Die Erfindung setzt sich zum Ziel, ein Verfahren zum automatisierten Detektieren von Schadstrukturen zu schaffen, welches bereits in der Entwicklungsphase eingesetzt werden kann und eine effiziente Gesamtüberprüfung eines elektronischen Schaltkreises erlaubt.

Dieses Ziel wird gemäß einem ersten Aspekt der Erfindung mit einem Verfahren der einleitend genannten Art erreicht, welches umfasst:
Erzeugen eines abstrakten Syntaxbaums aus dem Systemmodell;
Mustervergleichen von zumindest einer Teilstruktur des abstrakten Syntaxbaums mit zumindest einer in einer Schadstrukturdatenbank gespeicherten Referenz-Schadstruktur und, bei Übereinstimmung, Markieren der Teilstruktur als potentielle Schadstruktur;
Ermitteln charakteristischer Merkmale der potentiellen Schadstruktur aus einer Merkmalsdatenbank und Extrahieren von den ermittelten Merkmalen entsprechenden Eigenschaften der potentiellen Schadstruktur aus dieser;
Ermitteln eines Zulässigkeitsbereichs zu jeder extrahierten Eigenschaft aus einer Eigenschaftsdatenbank und Übersetzen der extrahierten Eigenschaft und des ermittelten Zulässigkeitsbereichs in eine Prüfungssprache für einen Zustandsautomaten; und
Prüfen eines Zustandsautomaten, der durch Umwandeln des Systemmodells oder des abstrakten Syntaxbaums gewonnen wurde, auf verschiedene Zustände und/oder Zustandsübergänge, wobei eine Schadstruktur detektiert wird, wenn in zumindest einem Zustand und/oder Zustandsübergang zumindest eine der extrahierten Eigenschaften den ermittelten Zulässigkeitsbereich verlässt.

Das Verfahren der Erfindung ermöglicht das Prüfen eines gesamten elektronischen Schaltkreises in Bezug auf spezifisch gesuchte oder alle möglichen strukturellen, aber auch verhaltensbezogenen Fehlfunktionen durch Schadstrukturen. Dabei werden charakteristische Merkmale und Eigenschaften nur jener Teile des elektronischen Schaltkreises bzw. seines Systemmodells im Detail geprüft, welche anhand des Mustervergleichs als potentielle Schadstrukturen im abstrakten Syntaxbaum identifiziert wurden. Das erfindungsgemäße Verfahren ermöglicht somit einerseits eine vollständige Prüfung des Systemmodells bei andererseits reduziertem Aufwand durch Konzentration auf vor der Prüfung des Zustandsautomaten identifizierte potentielle Schadstrukturen. Das Verfahren bedarf keines Aufbaus des Gesamtsystems und auch keines Echtbetriebs zum Detektieren von Schadstrukturen, sondern kann bereits im Entwicklungsstadium und sogar bloß auf einzelne Teile des Gesamtsystems angewendet werden, sodass durch ein frühzeitiges Evaluieren einzelner elektronischer Schaltkreise Kosten und Aufwendungen für einen späteren Neuaufbau des Systems im Detektionsfall gespart werden können. Das Verfahren ist überdies vollständig automatisierbar.

Als Hardwarebeschreibungssprache kann jede beliebige Sprache, z.B. Verilog, eingesetzt werden; bevorzugt wird als Hardwarebeschreibungssprache VHDL verwendet. Durch Verwendung einer derart standardisierten Hardwarebeschreibungssprache ist das Verfahren universell einsetzbar. Aus denselben Gründen ist es günstig, wenn als Prüfungssprache für den Zustandsautomaten LTL, CTL oder PSL verwendet wird.

Besonders effizient ist das Verfahren, wenn die extrahierten Eigenschaften je nach Einsatzzweck des elektronischen Schaltkreises gewichtet werden, wobei höher gewichtete Eigenschaften vorrangig geprüft werden. Auf diese Weise kann die Prüfung abgebrochen werden, wenn bei einer vorrangig geprüften wichtigen Eigenschaft eine Schadstruktur detektiert wird, wodurch Ressourcen gespart werden.

In einem zweiten Aspekt schafft die Erfindung eine Vorrichtung der einleitend genannten Art, welche umfasst:
eine Parsing-Einheit zum Erzeugen eines abstrakten Syntaxbaums aus dem Systemmodell;
eine der Parsing-Einheit nachgeschaltete Strukturidentifikations-Einheit zum Mustervergleichen von zumindest einer Teilstruktur des abstrakten Syntaxbaums mit zumindest einer Referenz-Schadstruktur aus einer Schadstrukturdatenbank und zum Markieren der Teilstruktur als potentielle Schadstruktur bei Übereinstimmung;
eine der Strukturidentifikations-Einheit nachgeschaltete Merkmalsextraktions-Einheit zum Ermitteln charakteristischer Merkmale der potentiellen Schadstruktur aus einer Merkmalsdatenbank und zum Extrahieren von den ermittelten Merkmalen entsprechenden Eigenschaften der potentiellen Schadstruktur aus dieser;
eine der Merkmalsextraktions-Einheit nachgeschaltete Eigenschaftserzeugungs-Einheit zum Ermitteln eines Zulässigkeitsbereichs zu jeder extrahierten Eigenschaft aus einer Eigenschaftsdatenbank und zum Übersetzen der extrahierten Eigenschaft und des ermittelten Zulässigkeitsbereichs in eine Prüfungssprache für einen Zustandsautomaten;
eine Modellextraktions-Einheit zum Erzeugen eines Zustandsautomaten aus dem Systemmodell oder dem abstrakten Syntaxbaum; und
eine der Eigenschaftserzeugungs-Einheit und der Modellextraktions-Einheit nachgeschaltete Prüfungs-Einheit zum Prüfen des Zustandsautomaten auf verschiedene Zustände und/oder Zustandsübergänge, wobei die Prüfungs-Einheit dafür ausgebildet ist, eine Schadstruktur zu detektieren, wenn in zumindest einem Zustand und/oder Zustandsübergang zumindest eine der extrahierten Eigenschaften den ermittelten Zulässigkeitsbereich verlässt.

In Bezug auf Vorteile und weitere vorteilhafte Ausführungsvarianten der erfindungsgemäßen Vorrichtung wird auf die obigen Ausführungen zum erfindungsgemäßen Verfahren verwiesen.

Die Erfindung wird nachfolgend anhand von in den beigeschlossenen Zeichnungen dargestellten Ausführungsbeispielen näher erläutert. In den Zeichnungen zeigen:
Fig. 1 ein Verfahren zum Detektieren von Schadstrukturen in einem elektronischen Schaltkreis gemäß der Erfindung in einem schematischen Ablaufdiagramm, das gleichzeitig ein Blockschaltbild der Vorrichtung der Erfindung darstellt;
die Fig. 2a und 2b jeweils ein kurzes Beispiel eines Systemmodells eines elektronischen Schaltkreises zur Prüfung durch das Verfahren bzw. die Vorrichtung von Fig. 1, einmal ohne (Fig. 2a) und einmal mit einer Schadstruktur (Fig. 2b), in VHDL-Listenform;
Fig. 3 ein Beispiel für den schadhaften elektronischen Schaltkreis gemäß Fig. 2b in einer Darstellung als abstrakter Syntaxbaum;
Fig. 4 charakteristische Merkmale eines Zählers aus dem Beispiel von Fig. 2b in XML-Listenform;
Fig. 5 Eigenschaften und Zulässigkeitsbereiche des Zählers von Fig. 4 mit zugehörigen Zulässigkeitsbereichen in einer Zustandsautomaten-Darstellung;
Fig. 6 einen aus dem Systemmodell von Fig. 2b gewonnenen Zustandsautomaten; und
Fig. 7 das Ergebnis einer Prüfung des Zustandsautomaten von Fig. 6 anhand der Eigenschaften und Zulässigkeitsbereiche von Fig. 5.

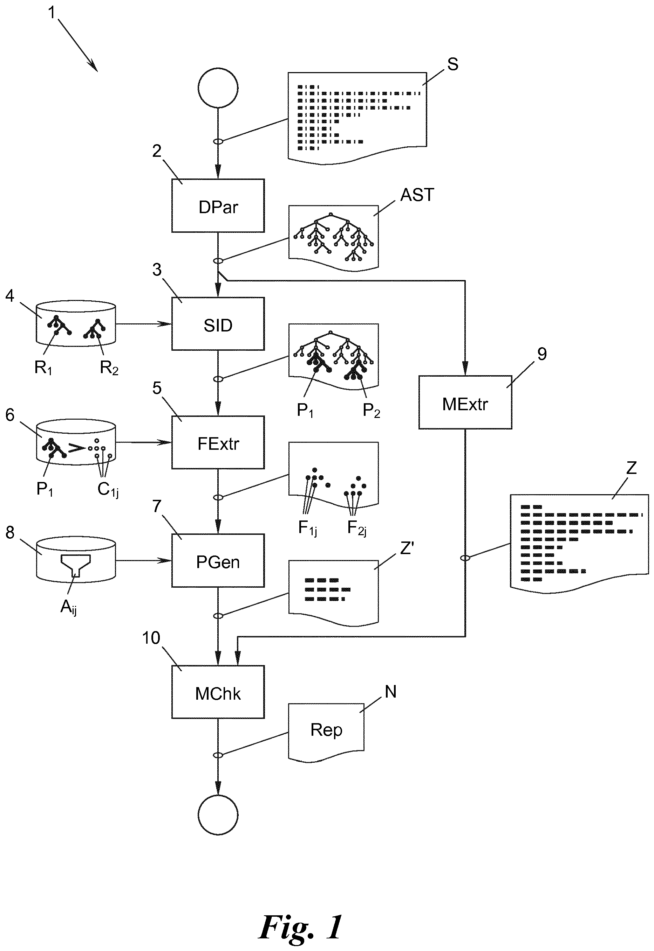

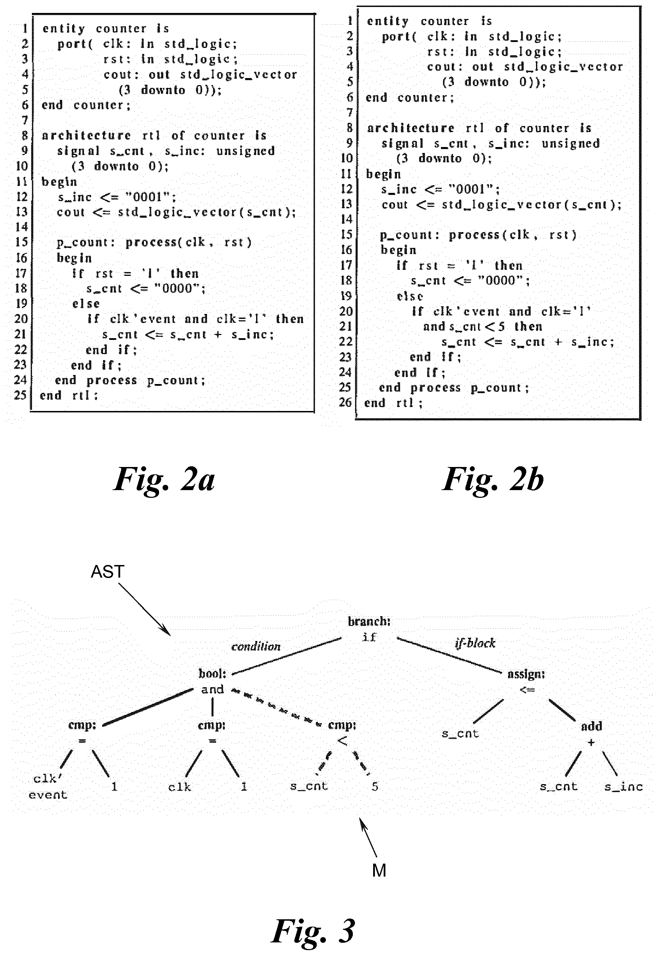

Gemäß den Fig. 1 und 2 sollen mithilfe eines in einer Vorrichtung 1 ablaufenden Verfahrens Schadstrukturen M, die in einen elektronischen Schaltkreis integriert worden sind, auch als "Hardware-Trojaner" bezeichnet, automatisiert detektiert werden. Im Allgemeinen werden elektronische Schaltkreise heute zunächst als ein Systemmodell S in einer Hardwarebeschreibungssprache modelliert und erst hinterher auf Basis des Systemmodells S physisch generiert. Eine Detektion von Schadstrukturen M kann somit durch Prüfen des Schaltkreises bereits ausgehend vom Systemmodell S in der Hardwarebeschreibungssprache erfolgen. Als Hardwarebeschreibungssprache wird im vorliegenden Beispiel die standardisierte "Very High Speed Integrated Circuit Hardware Description Language" (VHDL) verwendet; es könnte jedoch auch eine andere Hardwarebeschreibungssprache, z.B. Verilog, eingesetzt werden.

Die Fig. 2a und 2b zeigen als Beispiel für ein solches Systemmodell S einen synchronen 4-Bit-Zähler, welcher in VHDL modelliert ist. In Fig. 2a beschreiben die Zeilen 15 bis 24 den eigentlichen Zählprozess p_count: Eine Zählervariable s_cnt ist mittels Reset rst rücksetzbar (Zeilen 17 und 18), andernfalls wird ihr Wert mit jeder ansteigenden Flanke eines Taktsignals clk (Zeile 20) um den Wert eines Inkrements s_inc erhöht (Zeile 21). Anders als das Beispiel von Fig. 2a enthält der ansonsten gleichartige Zähler von Fig. 2b in Zeile 21 eine maligne Veränderung bzw. Schadstruktur "and s_cnt < 5", sodass der 4-Bit-Zähler auf einem Wert kleiner fünf eingefroren wird.

Um derartige - oder auch wesentlich komplexere - maligne Veränderungen gegenüber einer vorgegebenen Sollfunktion eines elektronischen Schaltkreises zu detektieren, wird im in der Vorrichtung 1 ablaufenden Verfahren gemäß Fig. 1 zunächst in einer Parsing-Einheit 2 der Vorrichtung 1 ein abstrakter Syntaxbaum AST aus dem Systemmodell S erzeugt. Der Begriff "abstrakter Syntaxbaum" AST bezeichnet dabei eine normierte semigraphische Darstellung der Syntax einer Software oder einer softwareähnlich (textuell) beschriebenen Hardware in Form eines Baumes, wie z.B. in Object Management Group, "Architecturedriven Modernization: Abstract Syntax Tree Metamode-1 (ASTM)", V 1.0, OMG Specification, Jänner 2011, näher ausgeführt wird. Da das Systemmodell S in einer textuellen Hardwarebeschreibungssprache (hier: VDHL) vorliegt, ist das Erzeugen des abstrakten Syntaxbaums AST daraus in bekannter Art und Weise möglich.

In Fig. 3 ist für das beispielhafte Systemmodell S nach Fig. 2b der abstrakte Syntaxbaum AST mit einer - strichliert gezeichneten - Schadstruktur M dargestellt.

In einer der Parsing-Einheit 2 nachgeschalteten Strukturidentifikations-Einheit 3, welche auf eine Schadstrukturdatenbank 4 zugreift, wird zumindest eine Teilstruktur des abstrakten Syntaxbaums AST mit zumindest einer in der Schadstrukturdatenbank 4 gespeicherten Referenz-Schadstruktur R₁, R₂, ..., allgemein Rᵢ, musterverglichen. An einer Übereinstimmung der verglichenen Teilstruktur mit der Referenz-Schadstruktur Rᵢ wird eine potentielle Schadstruktur P₁, P₂, ..., allgemein Pᵢ, im abstrakten Syntaxbaum AST erkannt und markiert.

Ein "Mustervergleich" ist dabei als struktureller Vergleich der Baumstruktur des abstrakten Syntaxbaums AST bzw. der Teilstruktur daraus mit der Referenz-Schadstruktur Rᵢ auf gleiche Form, d.h. auf Isomorphismus, zu verstehen.

Die Referenz-Schadstrukturen Rᵢ der Schadstrukturdatenbank 4 werden in der Regel im Vorhinein anhand bekannter Schadstrukturtypen und -varianten erzeugt, für den Vergleich mit einem abstrakten Syntaxbaum AST vorbereitet und in die Schadstrukturdatenbank 4 aufgenommen. Dabei kann die Schadstrukturdatenbank 4 jederzeit um (neue) Schadstrukturtypen bzw. -varianten erweitert oder verkleinert und/oder an spezifische Anwendungen bzw. abstrakte Syntaxbäume AST der zu untersuchenden elektronischen Schaltkreise angepasst werden.

Eine der Strukturidentifikations-Einheit 3 nachgeschaltete Merkmalsextraktions-Einheit 5 ermittelt aus einer Merkmalsdatenbank 6, mit welcher sie in Verbindung steht, charakteristische Merkmale Cᵢ₁ , Cᵢ₂, ..., allgemein Cᵢⱼ, der potentiellen Schadstruktur Pᵢ. Beispielsweise stellen für einen Zähler gemäß den Beispielen der Fig. 2a und 2b das Zählerregister, dessen Startwert, der Wert des Zählerinkrements und die Bedingung für das Inkrementieren des Zählers solche charakteristischen Merkmale Cᵢⱼ dar.

Die Merkmalsextraktions-Einheit 5 extrahiert nun zu den so ermittelten Merkmalen Cᵢⱼ entsprechende Eigenschaften Fᵢⱼ ("Properties") der potentiellen Schadstruktur Pᵢ aus dieser. Diese Eigenschaften Fᵢⱼ sind gleichsam die Attribute der Merkmale Cᵢⱼ, im Beispiel der Fig. 2a und 2b somit der Name des Zählerregisters (s_cnt), sein Startwert und Inkrement ('0000' bzw. s_inc) und die Bedingung für das Inkrementieren (gemäß Fig. 2a: "clk'event and clk = '1'"; gemäß Fig. 2b zusätzlich: "and s_cnt < 5").

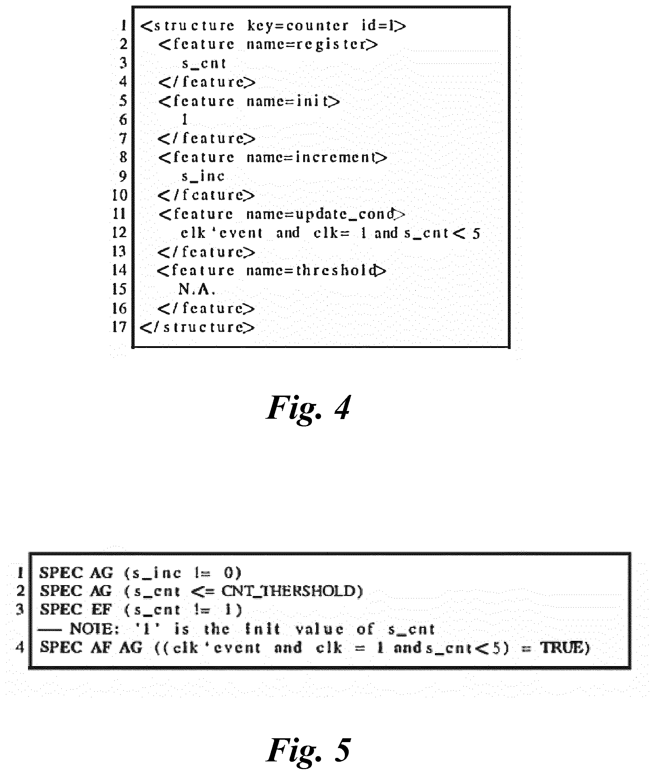

Die charakteristischen Merkmale Cᵢⱼ der potentiellen Schadstruktur Pᵢ werden von der Merkmalsextraktions-Einheit 5 in der erweiterbaren Auszeichnungssprache XML - wie in Fig. 4 dargestellt - oder einer vergleichbaren Darstellung für hierarchisch strukturierte Daten zusammengestellt. Fig. 4 zeigt in hierarchisch strukturierter Form alle charakteristischen Merkmale Cᵢⱼ des Zählers nach Fig. 2b und die den Merkmalen Cᵢⱼ entsprechenden Eigenschaften Fᵢⱼ.

Eine der Merkmalsextraktions-Einheit 5 nachgeschaltete Eigenschaftserzeugungs-Einheit 7 ermittelt aus einer Eigenschaftsdatenbank 8, mit welcher sie in Verbindung steht, zu jeder extrahierten Eigenschaft Fᵢⱼ einen Zulässigkeitsbereich Aᵢⱼ. Die Zulässigkeitsbereiche Aᵢⱼ werden je nach potentieller Schadstruktur Pᵢ nach verschiedenen Regeln festgelegt. Für einen Zähler könnten dies beispielsweise sein:
- das Inkrement des Zählers darf niemals 0 sein;
- der Wert des Zählerregisters muss unterhalb einer festgelegten Schranke bleiben;
- die Häufigkeit des Inkrementierens eines Zählers darf nicht 0 sein; und
- die Bedingung für das Inkrementieren des Zählers muss dauerhaft erfüllt sein.

Die extrahierten Eigenschaften Fᵢⱼ und die diesen jeweils als zugehörig ermittelten Zulässigkeitsbereiche Aᵢⱼ werden von der Eigenschaftserzeugungs-Einheit 7 in eine Prüfungssprache für einen Zustandsautomaten Z, gemäß Fig. 1 in Form einer Sequenz Z', übersetzt. Der Zustandsautomat Z kann beispielsweise als "Symbolic Model Verifier" (SMV) mit NuSMV ("Numeric SMV") in LTL ("Linear Temporal Logic"), CTL ("Computation Tree Logic"), PSL ("Property Specification Language") oder einer ähnlichen Prüfungssprache implementiert sein, wie weiter unten näher erläutert wird.

In Fig. 5 ist ein Beispiel für die extrahierten Eigenschaften Fᵢⱼ und die dazu ermittelten Zulässigkeitsbereiche Aᵢⱼ zu dem Beispiel von Fig. 2b dargestellt. Darin sind zu den einzelnen charakteristischen Merkmale Cᵢⱼ die jeweiligen extrahierten Eigenschaften Fᵢⱼ mit zugehörigen Zulässigkeitsbereichen Aᵢⱼ verzeichnet, u.zw. beispielsweise in Zeile 1, wonach das Zählerinkrement s_inc nicht gleich null sein darf, in Zeile 2 eine obere Schranke des Zählers (als globale Variable CNT_THRESHOLD) bzw. in Zeile 4, wonach die Inkrementierbedingung stets wahr ("TRUE") sein muss.

Eine Modellextraktions-Einheit 9 erzeugt aus dem Systemmodell S, welches im dargestellten Beispiel in VHDL modelliert wurde, oder - bevorzugt - aus dem abstrakten Syntaxbaum AST einen Zustandautomaten Z, im vorliegenden Beispiel für NuSMV oder alternativ in einer anderen Implementierung. Die Modellextraktions-Einheit 9 steht dazu entweder mit der Parsing-Einheit 2 in Verbindung oder übernimmt direkt das in die Vorrichtung 1 eingegebene Systemmodell S.

Fig. 1 stellt einerseits ein Blockschaltbild der Vorrichtung 1 mit ihren Einheiten 2, 3, 5, 7, 9 und 10 dar und versinnbildlicht andererseits ebenso ein Ablaufdiagramm der in den genannten Einheiten 2, 3, 5, 7, 9 und 10 ausgeführten Schritte des Verfahrens zum automatischen Detektieren von Schadstrukturen M.

Es versteht sich, dass der in der Modellextraktions-Einheit 9 ablaufende Schritt des Erzeugens des Zustandsautomaten Z in beliebiger zeitlicher Abfolge zu den in der Strukturidentifikations-Einheit 3, der Merkmalsextraktions-Einheit 5 und der Eigenschaftserzeugungs-Einheit 7 ablaufenden Verfahrensschritten ausgeführt werden kann, wenn er aus dem abstrakten Syntaxbaum AST erzeugt wird, und, wenn er aus dem Systemmodell S erzeugt wird, auch unabhängig vom Erzeugen des abstrakten Syntaxbaums AST in der Parsing-Einheit 2.

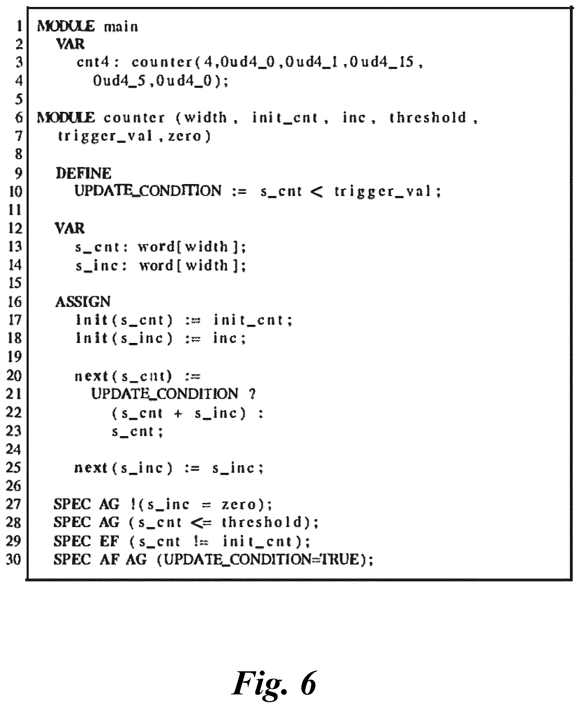

Eine der Eigenschaftserzeugungs-Einheit 7 und der Modellextraktions-Einheit 9 nachgeschaltete Prüfungs-Einheit 10 erhält den Zustandsautomaten Z von der Modellextraktions-Einheit 9 und die Sequenz Z' in Zustandsautomaten-Darstellung von der Eigenschaftserzeugungs-Einheit 7, wofür Fig. 6 ein auf Fig. 2b beruhendes Beispiel des Zustandsautomaten Z (mit Sequenz Z' in den Zeilen 27 - 30) zeigt, und prüft nun den Zustandsautomaten Z auf verschiedene Zustände bzw. Zustandsübergänge. Die Prüfungs-Einheit 10 detektiert dabei eine Schadstruktur M, wenn in zumindest einem Zustand bzw. Zustandsübergang zumindest eine der extrahierten Eigenschaften Fᵢⱼ den in der Sequenz Z' verzeichneten ermittelten Zulässigkeitsbereich Aᵢⱼ verlässt.

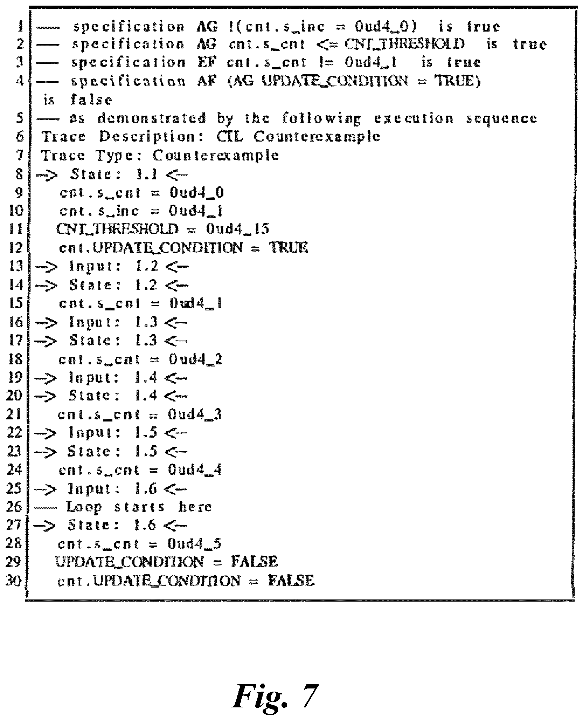

Fig. 7 zeigt ein Beispiel für einen von der Prüfungs-Einheit 10 erzeugten Prüfbericht N auf Grundlage des Beispiels der Fig. 2b. Laut Zeile 12 in Fig. 7 ist die Bedingung gemäß Zeile 4 in Fig. 5 bzw. Zeile 30 in Fig. 6 und Zeile 4 in Fig. 7 für das Inkrementieren des Zählers für zumindest einige Zählerwerte (hier: die Zählerwerte 0 bis 4) erfüllt. Hingegen ist diese Bedingung gemäß den Zeilen 29 und 30 in Fig. 7 für Werte der Zählervariable von 5 oder größer (Zeile 28) nicht erfüllt, sodass dieses Erfordernis auch in Summe nicht erfüllt, also "FALSE" (Zeile 30 in Fig. 7), ist.

Es versteht sich, dass der Prüfbericht N der Prüfungs-Einheit 10 jede beliebige Form haben kann.

Die Erfindung ist nicht auf die dargestellten Ausführungsformen beschränkt, sondern umfasst alle Varianten und Modifikationen, die in den Rahmen der angeschlossenen Ansprüche fallen. So kann beispielsweise, wenn gewünscht, die Eigenschaftserzeugungs-Einheit 7 die extrahierten Eigenschaften Fᵢⱼ je nach Einsatzzweck des elektronischen Schaltkreises gewichten und die Prüfungs-Einheit 10 in der Folge höher gewichtete Eigenschaften Fᵢⱼ vorrangig prüfen.

## Patentansprüche

1. Verfahren zum automatisierten Detektieren von Schadstrukturen, die in einen elektronischen Schaltkreis integriert sind, welcher ausgehend von einem in einer Hardwarebeschreibungssprache modellierten Systemmodell generiert wurde, umfassend:
Erzeugen (2) eines abstrakten Syntaxbaums (AST) aus dem Systemmodell (S);
Mustervergleichen (3) von zumindest einer Teilstruktur des abstrakten Syntaxbaums (AST) mit zumindest einer in einer Schadstrukturdatenbank (4) gespeicherten Referenz-Schadstruktur (Rᵢ) auf Isomorphismus und, bei Übereinstimmung, Markieren der Teilstruktur als potentielle Schadstruktur (Pᵢ);
Ermitteln (5) charakteristischer Merkmale (Cᵢⱼ) der potentiellen Schadstruktur (Pᵢ) aus einer Merkmalsdatenbank (6) und Extrahieren von den ermittelten Merkmalen (Cᵢⱼ) entsprechenden Eigenschaften (Fᵢⱼ) der potentiellen Schadstruktur (Pᵢ) aus dieser;
Ermitteln (7) eines Zulässigkeitsbereichs (Aᵢⱼ) zu jeder extrahierten Eigenschaft (Fᵢⱼ) aus einer Eigenschaftsdatenbank (8) und Übersetzen der extrahierten Eigenschaft (Fᵢⱼ) und des ermittelten Zulässigkeitsbereichs (Aᵢⱼ) in eine Prüfungssprache für einen Zustandsautomaten (Z); und
Prüfen (10) eines Zustandsautomaten (Z), der durch Umwandeln des Systemmodells (S) oder des abstrakten Syntaxbaums (AST) gewonnen wurde, auf verschiedene Zustände und/oder Zustandsübergänge, wobei eine Schadstruktur (M) detektiert wird, wenn in zumindest einem Zustand und/oder Zustandsübergang zumindest eine der extrahierten Eigenschaften (Fᵢⱼ) den ermittelten Zulässigkeitsbereich (Aᵢⱼ) verlässt.

2. Verfahren nach Anspruch 1, **dadurch gekennzeichnet, dass** als Hardwarebeschreibungssprache VHDL verwendet wird.

3. Verfahren nach Anspruch 1 oder 2, **dadurch gekennzeichnet, dass** als Prüfungssprache für den Zustandsautomaten (Z) LTL, CTL oder PSL verwendet wird.

4. Verfahren nach einem der Ansprüche 1 bis 3, **dadurch gekennzeichnet, dass** die extrahierten Eigenschaften (Fᵢⱼ) je nach Einsatzzweck des elektronischen Schaltkreises gewichtet werden, wobei höher gewichtete Eigenschaften (Fᵢⱼ) vorrangig geprüft werden.

5. Vorrichtung zum automatisierten Detektieren von Schadstrukturen, die in einen elektronischen Schaltkreis integriert sind, welcher ausgehend von einem in einer Hardwarebeschreibungssprache modellierten Systemmodell generiert ist, umfassend:
eine Parsing-Einheit (2) zum Erzeugen eines abstrakten Syntaxbaums (AST) aus dem Systemmodell (S);
eine der Parsing-Einheit (2) nachgeschaltete Strukturidentifikations-Einheit (3) zum Mustervergleichen von zumindest einer Teilstruktur des abstrakten Syntaxbaums (AST) mit zumindest einer Referenz-Schadstruktur (Rᵢ) aus einer Schadstrukturdatenbank (4) auf Isomorphismus und zum Markieren der Teilstruktur als potentielle Schadstruktur (Pᵢ) bei Übereinstimmung;
eine der Strukturidentifikations-Einheit (3) nachgeschaltete Merkmalsextraktions-Einheit (5) zum Ermitteln charakteristischer Merkmale (Cᵢⱼ) der potentiellen Schadstruktur (Pᵢ) aus einer Merkmalsdatenbank (6) und zum Extrahieren von den ermittelten Merkmalen (Cᵢⱼ) entsprechenden Eigenschaften (Fᵢⱼ) der potentiellen Schadstruktur (Pᵢ) aus dieser;
eine der Merkmalsextraktions-Einheit (5) nachgeschaltete Eigenschaftserzeugungs-Einheit (7) zum Ermitteln eines Zulässigkeitsbereichs (Aᵢⱼ) zu jeder extrahierten Eigenschaft (Fᵢⱼ) aus einer Eigenschaftsdatenbank (8) und zum Übersetzen der extrahierten Eigenschaft (Fᵢⱼ) und des ermittelten Zulässigkeitsbereichs (Aᵢⱼ) in eine Prüfungssprache für einen Zustandsautomaten (Z);
eine Modellextraktions-Einheit (9) zum Erzeugen eines Zustandsautomaten (Z) aus dem Systemmodell (S) oder dem abstrakten Syntaxbaum (AST); und
eine der Eigenschaftserzeugungs-Einheit (7) und der Modellextraktions-Einheit (9) nachgeschaltete Prüfungs-Einheit (10) zum Prüfen des Zustandsautomaten (Z) auf verschiedene Zustände und/oder Zustandsübergänge, wobei die Prüfungs-Einheit (10) dafür ausgebildet ist, eine Schadstruktur (M) zu detektieren, wenn in zumindest einem Zustand und/oder Zustandsübergang zumindest eine der extrahierten Eigenschaften (Fᵢⱼ) den ermittelten Zulässigkeitsbereich (Aᵢⱼ) verlässt.

6. Vorrichtung nach Anspruch 5, **dadurch gekennzeichnet, dass** die Hardwarebeschreibungssprache VHDL ist.

7. Vorrichtung nach Anspruch 5 oder 6, **dadurch gekennzeichnet, dass** die Prüfungssprache für den Zustandsautomaten (Z) LTL, CTL oder PSL ist.

8. Vorrichtung nach einem der Ansprüche 5 bis 7, **dadurch gekennzeichnet, dass** die Eigenschaftserzeugungs-Einheit (7) ferner dazu ausgebildet ist, die extrahierten Eigenschaften (Fᵢⱼ) je nach Einsatzzweck des elektronischen Schaltkreises zu gewichten, wobei die Prüfungs-Einheit (10) dafür ausgebildet ist, höher gewichtete Eigenschaften (Fᵢⱼ) vorrangig zu prüfen.

## Claims

1. A method for automated detection of malicious structures integrated in an electronic circuit which was generated starting from a system model modelled in a hardware description language, comprising:
creating (2) an abstract syntax tree (AST) from the system model (S);
pattern matching (3) of at least a substructure of the abstract syntax tree (AST) with at least one reference malicious structure (Rᵢ) stored in a database of malicious structures (4) with respect to isomorphism and, in case of matching, marking the substructure as a potential malicious structure (Pi);
determining (5) characteristic features (Cᵢⱼ) of the potential malicious structure (Pᵢ) from a database of features (6) and extracting properties (Fᵢⱼ) of the potential malicious structure (Pᵢ) therefrom which properties correspond to the determined features (Cᵢⱼ);
determining (7) a range of admissibility (Aᵢⱼ) for each extracted property (Fᵢⱼ) from a database of properties (8) and translating the extracted property (Fᵢⱼ) and the determined range of admissibility (Aᵢⱼ) into a test language for a state machine (Z); and
testing (10) a state machine (Z), which was obtained by transforming the system model (S) or the abstract syntax tree (AST), for different states and/or state transitions, wherein a malicious structure (M) is detected when in at least one state and/or state transition at least one of the extracted properties (Fᵢⱼ) leaves the determined range of admissibility (Aᵢⱼ).

2. The method according to claim 1, **characterised in that** VHDL is used as hardware description language.

3. The method according to claim 1 or 2, **characterised in that** LTL, CTL or PSL is used as test language for the state machine (Z).

4. The method according to any one of claims 1 to 3, **characterised in that** the extracted properties (Fᵢⱼ) are weighted depending on the intended use of the electronic circuit, wherein higher weighted properties (Fᵢⱼ) are tested preferentially.

5. A device for automated detection of malicious structures integrated in an electronic circuit which is generated starting from a system model modelled in a hardware description language, comprising:
a parsing unit (2) for creating an abstract syntax tree (AST) from the system model (S);
a structure identification unit (3), arranged downstream of the parsing unit (2), for pattern matching of at least a substructure of the abstract syntax tree (AST) with at least one reference malicious structure (Rᵢ) from a database of malicious structures (4) with respect to isomorphism and for marking the substructure as a potential malicious structure (Pᵢ) in case of matching;
a feature extraction unit (5), arranged downstream of the structure identification unit (3), for determining characteristic features (Cᵢⱼ) of the potential malicious structure (Pᵢ) from a database of features (6) and for extracting properties (Fᵢⱼ) of the potential malicious structure (Pᵢ) therefrom which properties correspond to the determined features (Cᵢⱼ);
a property creation unit (7), arranged downstream of the feature extraction unit (5), for determining a range of admissibility (Aᵢⱼ) for each extracted property (Fᵢⱼ) from a database of properties (8) and for translating the extracted property (Fᵢⱼ) and the determined range of admissibility (Aᵢⱼ) into a test language for a state machine (Z);
a model extraction unit (9) for creating a state machine (Z) from the system model (S) and the abstract syntax tree (AST); and
a testing unit (10), arranged downstream of the property creation unit (7) and the model extraction unit (9), for testing the state machine (Z) for different states and/or state transitions, wherein the testing unit (10) is configured to detect a malicious structure (M) when in at least one state and/or state transition at least one of the extracted properties (Fᵢⱼ) leaves the determined range of admissibility (Aᵢⱼ).

6. The device according to claim 5, **characterised in that** the hardware description language is VHDL.

7. The device according to claim 5 or 6, **characterised in that** the test language for the state machine (Z) is LTL, CTL or PSL.

8. The device according to any one of claims 5 to 7, **characterised in that** the property creation unit (7) is further configured to weight the extracted properties (Fᵢⱼ) depending on the intended use of the electronic circuit, wherein the testing unit (10) is configured to preferentially test higher weighted properties (Fᵢⱼ).

## Revendications

1. Procédé de détection automatisée de structures malveillantes qui sont intégrées dans un circuit électronique, lequel a été généré en partant d'un modèle de système modélisé dans un langage de description de matériel, comprenant :
la création (2) d'un arbre syntaxique abstrait (AST) à partir du modèle de système (S) ;
la comparaison en motif (3) du point de vue isomorphe d'au moins une structure partielle de l'arbre syntaxique abstrait (AST) avec au moins une structure malveillante de référence (Rᵢ) stockée dans une banque de données de structures malveillantes (4), et, en cas de concordance, le marquage de la structure partielle en tant que structure malveillante potentielle (Pᵢ) ;
la détermination (5) de caractéristiques (Cᵢⱼ) de la structure malveillante potentielle (Pᵢ) à partir d'une banque de données de caractéristiques (6) et l'extraction des propriétés (Fᵢⱼ) de la structure malveillante potentielle (Pᵢ) correspondant aux caractéristiques (Cᵢⱼ) déterminées à partir de celle-ci ;
la détermination (7) d'un domaine d'admissibilité (Aᵢⱼ) pour chaque propriété (Fᵢⱼ) extraite à partir d'une banque de données de propriétés (8) et la traduction de la propriété (Fᵢⱼ) extraite et du domaine d'admissibilité (Aᵢⱼ) déterminé dans un langage de test pour un automate d'état (Z) ; et
le test (10) d'un automate d'état (Z) qui a été obtenu par une transformation du modèle de système (S) ou de l'arbre syntaxique abstrait (ATS), vis-à-vis de divers états et/ou transitions vers des états, où une structure malveillante (M) est détectée lorsque, dans au moins un état et/ou une transition vers un état, au moins l'une des propriétés (Fᵢⱼ) extraites quitte le domaine d'admissibilité (Aᵢⱼ) déterminé.

2. Procédé selon la revendication 1, **caractérisé en ce qu'**en tant que langage de description de matériel on emploie le langage VDHL.

3. Procédé selon la revendication 1 ou 2, **caractérisé en ce qu'**en tant que langage de test pour l'automate d'état (Z), on emploie le langage LTL, CTL ou PSL.

4. Procédé selon l'une des revendications 1 à 3, **caractérisé en ce que** les propriétés (Fᵢⱼ) extraites sont pondérées en fonction d'une utilisation voulue du circuit électronique, où les propriétés (Fᵢⱼ) de la pondération plus élevée sont testées prioritairement.

5. Dispositif de détection automatisée de structures malveillantes qui sont intégrées dans un circuit électronique, lequel est généré en partant d'un modèle de système modélisé dans un langage de description de matériel, comprenant :
une unité d'analyse syntaxique (2) pour la création d'un arbre syntaxique abstrait (AST) à partir du modèle de système (S) ;
une unité d'identification de structure (3), disposée en aval de l'unité d'analyse syntaxique (2), pour la comparaison en motif du point de vue isomorphe d'au moins une structure partielle de l'arbre syntaxique abstrait (AST) avec au moins une structure malveillante de référence (Rᵢ) provenant d'une banque de données de structures malveillantes (4) et pour le marquage de la structure partielle en tant que structure malveillante potentielle (Pᵢ) en cas de concordance ;
une unité d'extraction de caractéristiques (5), disposée en aval de l'unité d'identification de structure (3), pour la détermination de caractéristiques (Cᵢⱼ) de la structure malveillante potentielle (Pᵢ) à partir d'une banque de données de caractéristiques (6) et pour l'extraction de propriétés (Fᵢⱼ) de la structure malveillante potentielle (Pᵢ) correspondant aux caractéristiques (Cᵢⱼ) déterminées à partir de celle-ci ;
une unité de création de propriétés (7), disposée en aval de l'unité d'extraction de caractéristiques (5), pour la détermination d'un domaine d'admissibilité (Aᵢⱼ) pour chaque propriété (Fᵢⱼ) extraite à partir d'une banque de données de propriétés (8) et pour la traduction de la propriété (Fᵢⱼ) extraite et du domaine d'admissibilité (Aᵢⱼ) déterminé dans un langage de test pour un automate d'état (Z) ;
une unité d'extraction de modèle (9) pour la création d'un automate d'état (Z) à partir du modèle de système (S) ou de l'arbre syntaxique abstrait (ATS) ; et
une unité de test (10), disposée en aval de l'unité de création de propriétés (7) et de l'unité d'extraction de modèle (9), pour le test de l'automate d'état (Z) vis-à-vis de divers états et/ou transitions vers des états, où l'unité de test (10) est conçue pour détecter une structure malveillante (M) lorsque, dans au moins un état et/ou une transition vers un état, au moins l'une des propriétés (Fᵢⱼ) extraites quitte le domaine d'admissibilité (Aᵢⱼ) déterminé.

6. Dispositif selon la revendication 5, **caractérisé en ce que** le langage de description de matériel est le langage VHDL.

7. Dispositif selon la revendication 5 ou 6, **caractérisé en ce que** le langage de test pour l'automate d'état (Z) est le langage LTL, CTL ou PSL.

8. Dispositif selon l'une des revendications 5 à 7, **caractérisé en ce que** l'unité de création de propriétés (7) est en outre conçue pour pondérer les propriétés (Fᵢⱼ) extraites en fonction d'une utilisation voulue du circuit électronique, où l'unité de test (10) est conçue pour tester prioritairement les propriétés (Fᵢⱼ) de la pondération plus élevée.
